Europäisches Patentamt

European Patent Office

Office européen des brevets

(19)

(11) Veröffentlichungsnummer: **0 446 384 A1**

## (12) EUROPÄISCHE PATENTANMELDUNG

(21) Anmeldenummer: **90104668.0**

(22) Anmeldetag: **12.03.90**

(51) Int. Cl.5: **A61B 6/02, H05G 1/64**

(43) Veröffentlichungstag der Anmeldung:
**18.09.91 Patentblatt 91/38**

(84) Benannte Vertragsstaaten:
**BE DE FR GB IT**

(71) Anmelder: **Siemens Aktiengesellschaft**
**Wittelsbacherplatz 2**
**W-8000 München 2(DE)**

(72) Erfinder: **Lange, Gottfried, Dipl.-Phys.**
**Dresdenerstrasse 38a**
**W-8520 Erlangen(DE)**
Erfinder: **Reinfelder, Hans-Erich, Dr. Ing.**
**Marktplatz 4**
**W-8520 Erlangen(DE)**

(54) **Röntgendiagnostikeinrichtung mit einem Speicherleuchtschirm.**

(57) Die Erfindung betrifft eine Röntgendiagnostikeinrichtung mit einem Speicherleuchtschirm (4) für die latente Speicherung des jeweiligen Röntgenstrahlenbildes, der einen Träger und eine Leuchtstoffschicht (13) aufweist, mit einer Röntgenaufnahmevorrichtung (1, 2) zur Erzeugung des Röntgenstrahlenbildes, mit einer Auslesevorrichtung (5 bis 12), bei der zur Bildwiedergabe der Speicherleuchtschirm (4) durch eine flächenförmige Abtastung mittels eines Abtaststrahles (7) einer Strahlenquelle (5) bildpunktweise zum Leuchten angeregt wird, mit einer Detektorvorrichtung (8, 9, 14, 15) zum flächenförmigen Erfassen des von der Leuchtstoffschicht (4) emittierten Lichtes und mit einem Bildwiedergabesystem (11). Die Leuchtstoffschicht (13) ist auf dem flächenförmigen Lichtleiter (8, 14) aufgebracht.

FIG 3

EP 0 446 384 A1

Die Erfindung betrifft eine Röntgendiagnostikeinrichtung mit einem Speicherleuchtschirm für die latente Speicherung des jeweiligen Röntgenstrahlenbildes, der einen Träger und eine Leuchtstoffschicht aufweist, mit einer Röntgenaufnahmevorrichtung zur Erzeugung des Röntgenstrahlenbildes, mit einer Auslesevorrichtung, bei der zur Bildwiedergabe der Speicherleuchtschirm durch eine flächenförmige Abtastung mittels eines Abtaststrahles einer Strahlenquelle bildpunktweise zum Leuchten angeregt wird, mit einer Detektorvorrichtung zum flächenförmigen Erfassen des von der Leuchtstoffschicht emittierten Lichtes und mit einem Bildwiedergabesystem.

In der Strahlentherapie kann durch Einsatz von Speicherleuchtschirmen über digitalisierte Bildinformation und Bildverarbeitung eine Kontrast- und Auflösungsverbesserung von Feldkontrollaufnahmen erzielt werden. Aufgrund des hohen Dynamikbereiches der Speicherleuchtschirme sollen dieselben für dosimetrische Aufnahmeauswertungen eingesetzt werden. Die bisher üblichen Filmaufnahmen zur Kontrolle der Feldgrößen der Patientenbestrahlungsfelder zeigen nur geringe Kontraste und Auflösungen und erlauben keine dosimetrischen Auswertungen.

In der DE-A-3 803 766 ist eine derartige Röntgendiagnostikeinrichtung beschrieben, bei der als strahlenempfindlicher Wandler ein Leuchtschirm aus einem Speicherleuchtstoff mit Röntgenstrahlen bestrahlt wird, so daß in ihm Defektelektronen erzeugt werden, die in Potentialfallen (Traps) gespeichert werden. In einer Auslesevorrichtung wird die gesamte Fläche dieses Speicherleuchtschirmes von einer zusätzlichen Strahlenquelle, beispielsweise einem Laser, bildpunktweise abgetastet, so daß die in den Traps gespeicherten Elektronen angeregt werden und in Rekombinationszentren zurückfallen können, wobei die Energiedifferenz in Form von Lichtquanten abgestrahlt wird. Dadurch ist es möglich, das derart in dem Speicherleuchtschirm gespeicherte Röntgenstrahlenbild auszulesen.

Zur flächenförmigen Abtastung des Speicherleuchtschirmes wird der Laserstrahl beispielsweise durch einen Dreh-Kipp-Spiegel in vertikaler und horizontaler Richtung abgelenkt, so daß alle auf dem Speicherleuchtschirm liegenden Bildpunkte nacheinander abgetastet werden. Der Speicherleuchtschirm ist zwischen zwei flächenförmigen Lichtleitern angeordnet, die das von dem Speicherleuchtstoff emittierte Licht erfassen und es auf seitlich angebrachte zeilenförmige Detektoren leiten. Das Ausgangssignal des Detektors wird beispielsweise einer normalen Fernsehkette zur Wiedergabe des Röntgenbildes auf einem Monitor zugeführt.

Als Speicherleuchtstoffe können hierbei die aus der DE-C-3 347 207 bekannten, mit Europium aktivierten Bariumfluor-Bromchlorid-Verbindungen Verwendung finden, die sich durch sichtbares Licht (Photostimulation) anregen lassen. Zur Anregung dieses Speicherleuchtstoffes läßt sich der üblicherweise verwendete He-Ne-Laser verwenden, der Strahlen einer Wellenlänge von 633 nm erzeugt.

Derartige Vorrichtungen weisen aber den Nachteil auf, daß ein Teil der emittierten Strahlung wegen mangelnder optischer Kopplung nicht von dem Detektor erfaßt wird, so daß sie in der Strahlentherapie nicht eingesetzt werden können.

Die Erfindung geht von der Aufgabe aus, eine Röntgendiagnostikeinrichtung der eingangs genannten Art zu schaffen, die eine hohe optische Ankopplung für das stimulierte Licht aufweist, so daß sie auch in der Strahlentherapie Verwendung finden kann.

Die Aufgabe wird erfindungsgemäß dadurch gelöst, daß die Leuchtstoffschicht auf dem flächenförmigen Lichtleiter aufgebracht ist. Dadurch erhält man eine hohe optische Ankopplung des Speicherleuchtstoffes an den Lichtleiter, da ein dazwischenliegender Träger entfallen kann, so daß Reflexionen an Grenzschichten zum Lichtleiter nahezu vermieden werden.

Es hat sich als vorteilhaft erwiesen, wenn der Lichtleiter aus einem durchsichtigen Material besteht. Zu Filterzwecken kann der Lichtleiter mit einem Farbstoff versehen sein. Ein besonders guter Wirkungsgrad wird erreicht, wenn der Lichtleiter aus einer lichtsammelnden und -leitenden, mit einem Fluoreszenzfarbstoff versehenen Kunststoffplatte (LISA-Kunststoffplatte) besteht. Die Herstellung der Leuchtstoffschicht geschieht zweckmäßigerweise durch Sprühen, Dampfen oder Gießen des Leuchtstoffes auf den Lichtleiter. Es geht wenig Licht verloren, wenn die nicht von dem Detektor abgedeckten Flächen des Lichtleiters verspiegelt sind.

Die Erfindung ist nachfolgend anhand von in der Zeichnung dargestellten Ausführungsbeispielen näher erläutert. Es zeigen:

FIG 1    den Aufnahmeteil einer bekannten Röntgendiagnostikeinrichtung,

FIG 2    den Wiedergabeteil einer bekannten Röntgendiagnostikeinrichtung und

FIG 3    eine perspektivische Ansicht der Ausleseeinheit einer erfindungsgemäßen Röntgendiagnostikeinrichtung.

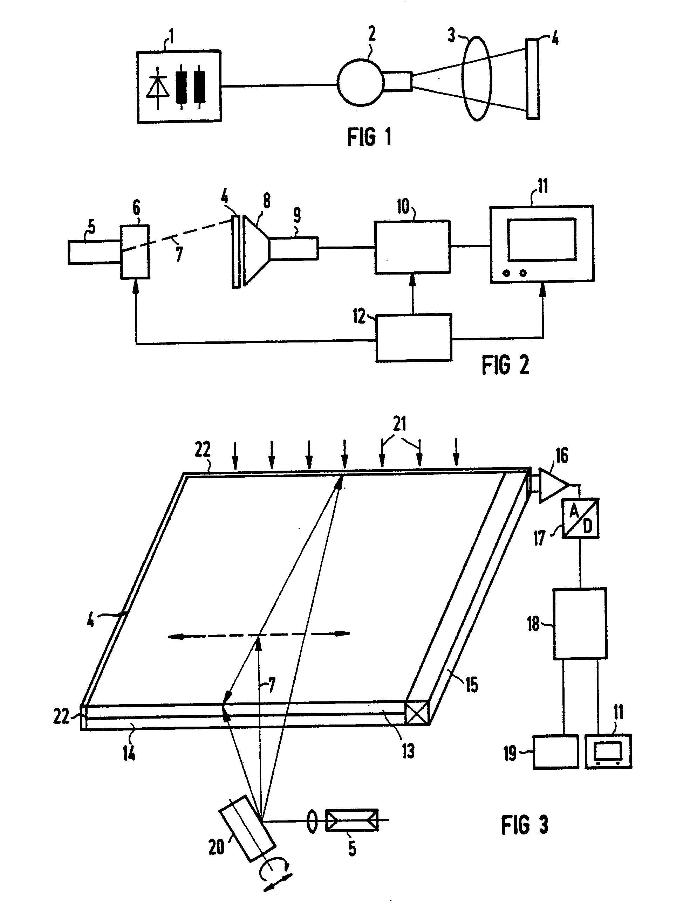

In der FIG 1 ist ein Hochspannungsgenerator 1 dargestellt, der eine Röntgenröhre 2 speist, die Röntgenstrahlen aussendet, die einen Patienten 3 durchdringen. Die durch den Patienten 3 entsprechend seiner Transparenz geschwächten Röntgenstrahlen fallen auf einen Lumineszenz-Speicherleuchtschirm 4. Dieses auffallende Strahlenbild erzeugt in dem Speicherleuchtschirm 4, wie bereits beschrieben, Defektelektronen, die in Potentialfallen des Speicherleuchtstoffes gespeichert werden, so daß in dem Speicherleuchtschirm 4 ein latentes Bild gespeichert ist.

Zur Wiedergabe des latenten, gespeicherten Bildes wird üblicherweise, wie in FIG 2 dargestellt, der Speicherleuchtschirm 4 durch eine Strahlenquelle, beispielsweise einen Laser 5, angeregt. Dem Laser 5 ist eine Ablenkvorrichtung 6 vorgeschaltet, die den Abtaststrahl 7 zeilenweise über den Speicherleuchtschirm 4 ablenkt. Die Ablenkvorrichtung 6 für den Abtaststrahl 7 kann beispielsweise aus einem Ablenkspiegel für die vertikale und einem eletrooptischen Strahlablenker für die horizontale Ablenkung bestehen. Ein Lichtleiter 8 erfaßt das von dem Speicherleuchtschirm 4 emittierte Licht und leitet es auf einen Detektor 9, der die Helligkeit der abgetasten Bildpunkte erfaßt und in ein elektrisches Signal umwandelt. Dieses analoge Ausgangssignal des Detektors 9 wird in einer Wiedergabeschaltung 10 in ein Videosignal zur Darstellung auf einem Monitor 11 umgewandelt. Eine Steuereinrichtung 12 bewirkt bei der Wiedergabe die Synchronisation der Ablenkvorrichtung 6, der Wiedergabeschaltung 10 und des Monitors 11. Die Wiedergabeschaltung 10 kann in bekannter Weise Bildspeicher, eine Verarbeitungsschaltung und Wandler aufweisen.

In FIG 3 ist die Auslesevorrichtung mit dem erfindungsgemäßen Speicherleuchtschirm 4 dargestellt, dessen Leuchtstoffschicht 13 beispielsweise auf einer Platte 14 zur Lichtleitung oder Lichtwandlung aufgebracht ist. Zur Erzielung der Leuchtstoffschicht 13 kann der Leuchtstoff auf die Platte 14 gesprüht, gedampft oder gegossen sein. Durch die erfindungsgemäße Aufbringung der Leuchtstoffschicht 13 auf der Platte 14 zur Lichtleitung oder Lichtwandlung erreicht man eine hohe optische Ankopplung für das durch Stimulation ermittierte Licht des Speicherleuchtstoffes.

An einer seitlichen Kante ist als Detektor 9 ein zeilenförmiges Detektorsystem 15 angebracht, das aus Photomultipliern, Schottky-Dioden, Sekundär-Elektronenvervielfachern, Silizium-Dioden-Zeilen oder CCD-Lichtwandlern bestehen kann. Das Ausgangssignal des Detektorsystems 15 wird einem Verstärker 16 zugeführt, der mit einem Analog/Digital-Wandler (A/D-Wandler 17) verbunden ist. Das durch den A/D-Wandler 17 digitalisierte Signal wird einem Rechner 18 zur Bildverarbeitung zugeführt. An dem Rechner 18 sind der Monitor 11 sowie eine Hardcopy-Einrichtung, beispielsweise ein Laser-Imager 19, zur Wiedergabe des abgetasteten und verarbeiteten Strahlenbildes angeschlossen.

Auf die eine Hauptfläche des Speicherleuchtschirmes 4 fallen die Röntgenstrahlen, wie dies durch die Pfeile 21 angedeutet ist. Diese Hauptfläche sowie die Seitenfläche, die nicht von dem Detektorsystem 15 abgedeckt sind, können durch Spiegelschichten 22 verspiegelt sein, damit aus diesen Flächen kein Licht austreten kann, sondern das emittierte Licht auf das Detektorsystem 15 reflektiert wird. Auf die andere Hauptfläche des Speicherleuchtschirmes 4 wird der von dem Laser 5 erzeugte Abtaststrahl 7 über einen Dreh-Kipp-Spiegel 20 abgelenkt, der den Speicherleuchtschirm 4 in Zeilenrichtung abtastet und nach jeder erfolgten Zeilenabtastung den Abtaststrahl 7 senkrecht zur Zeilenrichtung weiterbewegt. Dadurch erfolgt die bereits beschriebene Auslesung der in den Traps enthaltenen Bildinformationen.

Nach erfolgter Auslesung bleibt ein Teil des Strahlenbildes als Restinformation in dem Speicherleuchtschirm 4 gespeichert. Bevor eine erneute Röntgenaufnahme erfolgen kann, muß diese Restinformation gelöscht werden. Dies erfolgt durch eine Löschvorrichtung, die beispielsweise aus einer nicht dargestellten Xenon-Blitzlampe besteht, durch deren Blitz die restlichen noch in den Traps verbliebenen Defektelektronen freigegeben werden.

Als Speicherleuchtstoff kann ein Alkalihalogenid-Speicherleuchtstoff Verwendung finden, der als Alkalimetall Barium, Rubidium, Kalium oder Cäsium, und als Halogenid Chlor, Brom oder Jod enthält und mit Thallium, Europium, Samarium oder Cer dotiert ist. Als Speicherleuchtstoff eignet sich aber auch beispielsweise Strontium-Sulfid.

Als plattenförmige Lichtleiter lassen sich vorteilhaft auch sogenannte LISA-Kunststoffplatten verwenden, die in der Druckschrift der Fa. Bayer "Anwendungstechnische Information" 346/81, 10. LISA-Kunststoffe, Druckzeichen KL 47.310 vom 01.03.1981 beschrieben sind. Die Kunststoffplatten sind dabei mit einem Fluoreszenzfarbstoff eingefärbt. Sie absorbieren direktes oder diffuses Licht, das als Fluoreszenzstrahlung wieder emittiert wird. Durch Totalreflektion an den Oberflächen der Kunststoffplatte wird dieses Licht an die Seitenkanten der Platte geleitet und tritt dort aus. Bei derartigen Fluoreszenzfarbstoffen liegt das Maximum des Absorbtionsspektrum und das Maximum des Emissionsspektrums so weit auseinander, daß das fluoreszierende Licht nicht oder nur gering geschwächt wird.

Durch diese erfindungsgemäße Röntgendiagnostikeinrichtung erhält man ein Auslesesystem für einen Speicherleuchtschirm, der sich durch die hohe Ankopplung des Speicherleuchtstoffes an den Lichtleiter auch in der Strahlentherapie einsetzen läßt. Es kann als flache Baueinheit ausgeführt werden und ist somit beispielsweise unter Patiententischen anbringbar. Weiterhin können innerhalb von 10 s nach Strahlungseinschaltung Feldkontrollaufnahmen erhalten werden, die Informationen über die Lage des Bestrahlungsfeldes im Patienten liefern. Die applizierte Dosis kann während der gesamten Bestrahlungszeit integriert werden und das ausgelesene Speicherbild zur exakten Bestimmung der Dosisverteilung im Bestrahlungsfeld herangezogen werden. Die Speicherleuchtschirme haben über einen hohen Dosisbereich eine lineare Signal-Dosis-Abhängigkeit und sind für dosimetrische Auswertungen geeignet. Durch die Digitalisierung der Bildinformation und nachfolgende Bildverarbeitung lassen sich in der Strahlentherapie kontrastreichere und schärfere Bilder erzielen als bei bisherigen Filmaufnahmen. Das System kann als Quasi-On-Line-System eingesetzt werden und notwendige Feldkontroll-Korrekturen lassen sich direkt am Bildmonitor entscheiden. Weiterhin ermöglicht die Verwendung zeilenförmiger Detektorsysteme und die Wellenlängentransformation in LISA-Platten eine optimale optische Anpassung an Halbleiter-Detektoren.

## Patentansprüche

1. Röntgendiagnostikeinrichtung mit einem Speicherleuchtschirm (4) für die latente Speicherung des jeweiligen Röntgenstrahlenbildes, der einen Träger und eine Leuchtstoffschicht (13) aufweist, mit einer Röntgenaufnahmevorrichtung (1, 2) zur Erzeugung des Röntgenstrahlenbildes, mit einer Auslesevorrichtung (5 bis 12), bei der zur Bildwiedergabe der Speicherleuchtschirm (4) durch eine flächenförmige Abtastung mittels eines Abtaststrahles (7) einer Strahlenquelle (5) bildpunktweise zum Leuchten angeregt wird, mit einer Detektorvorrichtung (8, 9, 14, 15) zum flächenförmigen Erfassen des von der Leuchtstoffschicht (4) emittierten Lichtes und mit einem Bildwiedergabesystem (11), **dadurch gekennzeichnet,** daß die Leuchtstoffschicht (13) auf dem flächenförmigen Lichtleiter (8, 14) aufgebracht ist.

2. Röntgendiagnostikeinrichtung nach Anspruch 1, **dadurch gekennzeichnet,** daß der Lichtleiter (8, 14) aus einem durchsichtigen Material besteht.

3. Röntgendiagnostikeinrichtung nach Anspruch 1, **dadurch gekennzeichnet,** daß der Lichtleiter (8, 14) mit einem Farbstoff versehen ist.

4. Röntgendiagnostikeinrichtung nach Anspruch 3, **dadurch gekennzeichnet,** daß der Lichtleiter (8, 14) aus einer lichtsammelnden und -leitenden, mit einem Fluoreszenzfarbstoff versehene Kunststoffplatte (Lisa-Kunststoffplatte) besteht.

5. Röntgendiagnostikeinrichtung nach einem der Ansprüche 1 bis 4, **dadurch gekennzeichnet,** daß der Leuchtstoff zur Bildung der Leuchtstoffschicht (13) auf den Lichtleiter (8, 14) gesprüht, gedampft oder gegossen ist.

6. Röntgendiagnostikeinrichtung nach einem der Ansprüche 1 bis 5, **dadurch gekennzeichnet,** daß die nicht von dem Detektor (9) abgedeckten Flächen des Lichtleiters (14) verspiegelt sind.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | DE-A-3 803 766 (SIEMENS AG) <br> * Spalte 2, Zeile 60 - Spalte 5, Zeile 7; Figuren 1-6 * <br> --- | 1-4 | A 61 B 6/02 <br> H 05 G 1/64 |
| X | IEEE TRANSACTIONS ON NUCLEAR SCIENCE Band NS-33, Nr. 1, Februar 1986, Seiten 542-545, New York, US; E.F. EIKENBERRY et al.: "A Two Dimensional X-RAY Detector with a Slow-Scan Charge Coupled Device Readout" <br> * Seite 542, linke Spalte, Zeile 11 - rechte Spalte, Zeile 29; Figur 1 * <br> --- | 1,2 | |
| X <br><br> A | EP-A-0 286 393 (BRITISH AEROSPACE PUBLIC LTD. CO.) <br> * Spalte 5, Zeile 29 - Spalte 8, Zeile 23; Figuren 1,2 * <br> --- | 1,2 <br><br> 5 | |
| A | DE-A-3 332 648 (SIEMENS AG) <br> * Seite 5, Zeile 34 - Seite 9, Zeile 2; Figuren 1-3 * <br> ----- | 1 | |

| RECHERCHIERTE SACHGEBIETE (Int. Cl.5) |
|---|
| A 61 B 6/00 <br> H 05 G 1/00 <br> H 04 N 5/00 <br> G 01 N 23/04 |

Der vorliegende Recherchenbericht wurde für alle Patentansprüche erstellt

| Recherchenort | Abschlußdatum der Recherche | Prüfer |
|---|---|---|
| Berlin | 12 November 90 | WEIHS J.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument